Europäisches Patentamt

European Patent Office

Office européen des brevets

(19)

(11) Veröffentlichungsnummer: **0 005 262**
B1

(12) **EUROPÄISCHE PATENTSCHRIFT**

(21) Anmeldenummer: **79101329.5**

(22) Anmeldetag: **02.05.79**

(51) Int. Cl.³: **C 02 F 1/70, C 22 B 43/00**

(54) **Verfahren zur Abtrennung von Quecksilber aus wässrigen Lösungen**

(30) Priorität: **02.05.78 DE 2819153**

(43) Veröffentlichungstag der Anmeldung:
**14.11.79 Patentblatt 79/23**

(45) Bekanntmachung des Hinweises auf die Patenterteilung:
**10.12.80 Patentblatt 80/25**

(84) Benannte Vertragsstaaten:
**BE CH DE FR GB IT NL SE**

(56) Entgegenhaltungen:
**FR - A - 2 156 895**
**FR - A - 2 279 675**
**US - A - 4 038 071**

(73) Patentinhaber: **WACKER-CHEMIE GMBH**
**Prinzregentenstrasse 22**
**D - 8000 München 22 (DE)**

(72) Erfinder: **Falbesaner, Egon, Dr. Dipl.-Chem.**
**Marienbergstrasse 68**
**D - 8263 Burghausen (DE)**
**Bichler, Josef**
**Duttendorf 112**
**A - 5122 Ach (AT)**
**Wimmer, Eberhard, Dipl.-Ing.**
**Marienbergstrasse 56**
**D - 8263 Burghausen (DE)**

Courier Press, Leamington Spa, England.

# 0 005 262

Verfahren zur Abtrennung von Quecksilber aus wäßrigen Lösungen

Quecksilberhaltige Industrieabwässer stellen wegen der hohen Giftigkeit des in metallischer oder ionogener Form vorliegenden Quecksilbers eine Gefahr für die Umwelt dar. Die Quecksilberemission von industrieanlagen muß daher so niedrig wie möglich gehalten werden. Zu den Anlagen, die Quecksilber emitieren, gehören u.a. auch Chloralkalielektrolyseanlagen, die nach dem Amalgamverfahren arbeiten.

So wurde u.a. vorgeschlagen, Quecksilber durch Ionenaustauscher (SE—PS 330 863) oder durch Extraktion (DE—OS 27 18 457) aus Industieabwässern zu entfernen. Diese Verfahrensweise beinhaltet jedoch den Nachteil, daß es notwendig ist, vor der eigentlichen Entfernung des Quecksilbers allgegenwärtige Schmutzpartikel aus den zu reinigenden Abwässern zu entfernen.

Quecksilberfällungsverfahren, die unter Ausbildung schwer löslicher Quecksilberverbindungen bzw. metallischen Quecksilbers durchgeführt werden, beinhalten den Nachteil, daß die Filtration nur unter Verwendung von Filterhilfsmitteln effektiv durchgeführt werden kann. Bei der Abscheidung von metallischem Quecksilber durch Reduktion mittels Natriumborhydrid (US—PS 37 64 528) wird eine adsorptive Anschwemmfiltration über Aktivkohle vorgeschlagen, bei dem Reduktionsverfahren mittels Hydrazin (DE—OS 19 58 169) erfolgt zusätzlich die Zugabe von Flockungsmitteln, wie Calciumchlorid oder Aluminiumsulfat, vor dem Filtrationsschritt. Eine andere Verfahrensweise besteht darin, (DE—OS 26 13 128) das Quecksilber im Betriebsabwasser mit dem 10- bis 100-fachen Uberschuß an Eisen-(II)-Salzen als schwer lösliches Quecksilber-(I)-Salz auszuflocken.

Diese Verfahren sind einerseits nicht auf ionogene und metallische Quecksilberverunreinigungen enthaltende Abwässer anwendbar, und beinhalten zudem den Nachteil, daß der Quecksilbergehalt in der Trockensubstanz des Filterkuchens so gering ist, daß eine wirtschaftliche Aufarbeitung der Filterkuchen mit einem hohen Kostenaufwand verbunden ist.

Aufgabe der Erfindung war es, ein Verfahren zur Entfernung von Quecksilber aus wäßrigen Lösungen zu finden, das ohne zusätzliche Filtrationshilfsmittel und unter Anwendung erprobter Reduktionsverfahrensschritte für ionogene Quecksilberverunreinigungen eine wirtschaftliche Reinigung von Industrieabwässern von Quecksilberverunreinigungen ermöglicht.

Gegenstand der Erfindung ist ein Verfahren zur Abtrennung von Quecksilber und Quecksilberverbindungen aus wäßrigen Lösungen, insbesondere Industrieabwässeren, durch Reduktion und Filtration, dadurch gekennzeichnet, daß diese nach einem Reduktionsschritt in einem Absitzbecken von Quecksilberteilchen und Schmutzteilchen geklärt werden und anschließend die überstehende wäßrige Lösung aus dem Absitzbecken durch eine Tiefenfiltration mit einem Filtermedium der Korngröße 0,02 bis 2 mm, vorzugsweise 0,04 bis 0,6 mm, Teilchendurchmesser abgezogen wird und danach das Quecksilber aus dem Tiefenfilter durch Rückspülung in das Absitzbecken entfernt und im Absitzbecken zur Abscheidung gebracht wird.

Besonders vorteilhaft ist die Durchführung des Filtrationsverfahrens dann, wenn als Filtermedium Quarzsand eingesetzt wird. Eine weitere Verbesserung des Verfahrens besteht darin, daß Quarzsand einheitlicher Korngröße eingesetzt wird.

Überraschenderweise wird es durch das erfindungsgemäße Verfahren möglich, feindisperses Quecksilber, das in quasi kolloidalem Zustand beim Klärungsschritt im Absitzbecken in der wäßrigen Lösung in der Schwebe gehalten wird, durch die Filtration in einem Tiefenfilter mit einem Filtermedium der Teilchengröße 0,02 bis 2 mm, vorzugsweise 0,04 bis 0,6 mm, weitgehendest aus dem Abwasser entfernt werden kann und in einem nachfolgenden Rückspülschritt das im Tiefenfilter niedergeschlagene Quecksilber durch Rückspülung in das Absitzbecken zur Abscheidung gebracht werden kann. Die Möglichkeit des Rückspülens des mit Quecksilberteilchen beladenen Tiefenfiltermediums ist um so überraschender, als das spezifisch schwerere Quecksilber bei der Ausbildung einer Wirbelschicht während des Rückspülverfahrens entgegen der zu erwartenden Dichteunterschiede aus dem Filter ausgeschwemmt wird.

Die Aufgabe wird dadurch gelöst, daß zunächst der Anteil des ionogen vorliegenden Quecksilbers im Abwasser nach einem der bekannten Reduktionsverfahren, z.B. mittels Hydrazin, Hydroxylamin oder Natriumborhydrid, in die metallische Form übergeführt wird. Dies geschieht im allgemeinen durch Zugeben der Reduktionsmittel zum gerührten Abwasser im Absitzbecken, wobei beispielsweise vermittels pH-Elektroden der pH-Wert des Abwassers kontrolliert und ggf. auf einen Wert zwischen 7 und 11 einreguliert wird. Daraufhin folgt eine Vorklärung des Abwassers in einem Absitzbecken, in dem das grobdisperse Quecksilber und andere Verunreinigungen des Abwassers, wie Schmutzteilchen, ausgeschieden werden. Die Verweilzeit im Absitzbecken beträgt zwischen 2 Stunden und 2 Tagen. Vorzugsweise wird ein Absitzbecken verwendet, dessen Tiefe größer als dessen Breite ist.

Das so vorgereinigte Abwasser wird dann nach einer eventuell notwendigen pH-Justierung auf einen pH-Wert zwischen 7 und 11 zur Abtrennung des feindispergierten Quecksilbers einer Tiefenfiltration unterworfen. Dazu wird das Abwasser aus dem Absitzbecken vermittels beispielsweise einer Pontonpumpe zum Tiefenfilter gepumpt. Dieser besteht am zweckmäßigsten aus einem handelsüblichen Sandfilter, der aus einem Druckbehälter mit eingesetztem Düsenboden zusammengesetzt ist. Auf diesem Düsenboden befindet sich das Filtermedium in einer Höhe zwischen 20 und 80 cm. Das

## 0 005 262

Filtermedium besteht aus Filterteilchen mit einer durchschnittlichen Teilchengröße zwischen 0,02 bis 2 mm, vorzugsweise 0,04 bis 0,6 mm Durchmesser, Das Filtermedium besteht vorzugswise aus Quarzsand, es können aber auch andere feinkörnige inerte Materialien, wie Zirkonsand, allein oder im Gemisch zugegen sein. Das Filtermedium kann aus einer Schicht mit einheitlicher Teilchengröße aufgebaut sein, es ist jedoch auch möglich, daß Teilchen unterschiedlicher Teilchengröße miteinander vermischt vorliegen. Weiterhin ist es möglich, daß Schichten mit Filterteilchen kleinen Durchmessers und solche mit größerem Durchmesser abwechseln. Vorzugsweise besteht die Filterschicht aus einer oberen, feinkörnigen Sandschicht und einer darunterliegenden gröberkörnigen Sandschicht, wobei feinkörnig und grobkörnig im Rahmen der beanspruchten Korngröße zu verstehen ist. Das Filtrat wird unterhalb des Düsenbodens abgezogen. Während des Filtriervorgangs beträgt die Strömungsgeschwindigkeit im Filtermedium zwischen 5 und 25 m/Stunde. Das erfindungsgemäße Trennungsverfahren erlaubt es, das Abwasser praktisch quecksilberfrei zu filtrieren, wobei Quecksilberrestgehalte unter 0,05 mg Quecksilber/Liter Abwasser erreicht werden.

Ein weiterer Verfahrensschritt besteht darin, das im Tiefenfilter während des Filtrationsverfahrens angesammelte Quecksilber durch Rückspülung aus dem Filtermedium wieder zu entfernen und das Filtermedium dadurch für die erneute Filtration bereit zu stellen. Zur Rückspülung des Quecksilbers aus dem Filtermedium wird mit einer Strömungsgeschwindigkeit zwischen 10 und 30 m/Stunde eine Wirbelschicht im Filterdruckgefäß erzeugt, wobei das an das Filtermedium adsorbierte Quecksilber während kurzer Zeit aus dem Filtermedium ausgetragen und in das Absitzbecken zurückgespült wird. Dadurch wird das Tiefenfilter für erneute Filtration von feinteiligem Quecksilber enthaltendem Abwasser bereitgestellt. Nach diesem Filtrationsschritt ist das feinteilige Quecksilber so weit agglomeriert, daß es im Absitzbecken sedimentiert. Es wurde in keinem Fall beobachtet, daß der Ablauf aus dem Absitzbecken nach dem Rückspülen eines Filters erhöhte Quecksilbergehalte aufweist. Durch Parallelinstallation von zwei Filtern kann eine kontinuierliche Betriebsweise erreicht werden, wobei eines der beiden Filteraggregate die meiste Zeit als Reserve bereitsteht, da die Rückspülung eines Filters nach maximal einer halben Stunde beendet ist.

### Beispiel 1

Das Abwasser einer Chloralkali-Elektrolyse nach dem Amalgamverfahren in einer konstanten Menge von 4,3 m³/Stunde wurde in ein Absitzbecken von 180 m³ Fassungsvermögen geleitet und auch 4,3 m³/Stunde an geklärtem Abwasser aus dem Becken am anderen Ende kontinuierlich mittels Pontonpumpe 30 cm unter der Wasseroberfläche abgezogen. Während der ganzen Versuchsdauer betrug die Füllhöhe im Absitzbecken 3,10 m. Das Rohabwasser hatte einen pH-Wert von 12,1 und wurde vor der Filtration mittels Salzsäure auf pH 9 eingestellt. Ionogenes Quecksilber wurde mit Hydrazin reduziert, und zwar in der Art, daß in den Abwasserzulauf zum Absitzbecken soviel 2 %-ige Hydrazinlösung eindosiert wurde, daß nach der Filtration das gereinigte Abwasser noch einen Hydrazingehalt von 0,3 mg/l aufwies. Die Filterschicht über dem Düsenboden des Filters hatte einen Aufbau von 20 cm Quarzsand der Körnung 1 bis 2 mm und arüber 40 cm Schichthöhe Quarzsand der Körnung 0,1 bis 0,4 mm. Die Filtrationsgeschwindigkeit betrug 8,6 m³/m² x Stunde. Der Druckverlust in der Filterschicht betrug bei Versuchsbeginn 0,1 bar und stieg langsam an. Nach 176 Betriebsstunden erreichte der Differenzdruck 2 bar und der Versuch wurde beendet. Der Gesamtdurchsatz an Abwasser betrug 755 m³. Die Quecksilbergehalte des Abwassers an den verschiedenen Meßstellen bewegten sich während der gesamten Versuchsdauer in engen Grenzen und betrugen im

| | |
|---|---|
| Zulauf zum Absitzbecken | 16,8 bis 17,5 mg Hg/l |
| Ablauf aus dem Absitzbecken | 5,9 bis 6,3 mg Hg/l |
| Abwasser nach der Filtration | unter 0,05 mg Hg/l |

Die Rückspülung des Filters erfolgte mit einer Wassermenge von 3,2 l/sek. entsprechend einer Aufwärtsströmung von 0,64 cm/sek., bezogen auf das leere Filter. Am Schauglas war erkennbar, daß das Rückspülwasser stark grauschwarz verschmutzt und nach beendeter Rückspülung nach 20 Minuten wieder klar ablief.

Nach sechsmonatigem Betreiben des Sandfilters mit 32-maligem Rückspüllen wurde dem filter unmittelbar nach einer Rückspülung eine Sandprobe entnommen und auf Quecksilber untersucht. Der ermittelte Quecksilberwert von 0,13% zeigt, daß eine adhäsive Bindung des Quecksilbers am quarzsand beim Rückspülen in der Wirbelschicht weitgehendest aufgehoben wird.

3

### Beispiel 2

Die Körnung des Sandes im Filter wurde geändert, im übrigen wurde wie im Beispiel 1 verfahren.

| | |
|---|---|
| Grundfüllung 20 cm Quarzsand | 1 bis 2 mm Korngröße |
| darüber 10 cm Quarzsand | 0,1 bis 0,6 mm Korngröße |
| darüber 30 cm Quarzsand | 0,04 bis 0,2 mm Korngröße |

Die Laufzeit des Filters betrug 95 Stunden bei einem kontinuierlichen Durchsatz von 4,1 m³/.Stunde entsprechend 390 m³ filtriertem Abwasser. Der Quecksilbergehalt des Abwassers betrug

| | |
|---|---|
| Zulauf zum Absitzbecken | 13,8 bis 14,3 mg H g / l |
| Ablauf aus dem Absitzbecken | 6,8 bis 7,4 mg H g / l |
| Abwasser nach der Filtration | 0,03 bis 0,04 mg H g / l |

Die rückspülung des Filters erfolgte mit einer Wassermenge von 1,5 l/sek. entsprechend einer Aufwärtsströmung von 0,3 cm/sek. Bis zum Klarlauf des Filters vergingen 35 Minuten.

### Beispiel 3

Als Reduktionsmittel für ionogenes Quecksilber wurde Natriumborhydrid verwendet, und zwar als 0,6 %-ige wäßrige alkalische Lösung. Im übrigen wurde entsprechend Beispiel 1 verfahren. Die Quecksilbergehalte des Abwassers betrugen

| | |
|---|---|
| Zulauf zum Absitzbecken | 15,2 bis 16,3 mg H g / l |
| Ablauf aus dem Absitzbecken | 3,5 bis 4,1 mg H g / l |
| Abwasser nach der Filtration | 0,02 bis 0,03 mg H g / l |

Die Laufzeit des Filters bis zur notwendigen Rückspülung betrug 141 Stunden.

### Beispiel 4

Eine vergleichende Untersuchung über die adhäsive Wirkung verschiedener Materialien gegenüber metallischem Quecksilber wurde vorgenommen. Ein Glasrohr von 60 cm Höhe und 3,5 cm Durchmesser wurde unten mit einer grobporigen Fritte verschlossen und mit Quarzsand der Körnung 0,1 bis 0,2 mm 40 cm hoch angefüllt. Ein zweites identisch hergerichtetes Glasrohr wurde mit Zirkonsand (Zirkonsilikat) der Körnung 0,1 bis 0,2 mm gefüllt. Beide Rohre wurden mit vorgeklärtem Abwasser von pH 9,5, einem Quecksilbergehalt von 12,3 mg/l und einem Hydrazinüberschuß von 3,1 mg/l beaufschlagt, und zwar gleichmäßig mit je 5 l/h. Stündlich wurden Proben des filtrats entnommen, über eine Zeit von 6 Stunden. Die vereinigten Filtrate jedes Filters wurden auf Quecksilber analysiert. Diese Durchschnittswerte ergaben bei Filtration

| | |
|---|---|
| durch Quarzsand | 0,040 mg Quecksilber pro Liter |
| durch Zirkonsand | 0,033 mg Quecksilber pro Liter |

Zirkon zeigt also ein deutlich besseres Adhäsionsvermögen gegenüber metallischem Quecksilber.

**Patentansprüche**

1. Verfahren zur Abtrennung von Quecksilber und Quecksilberverbindungen aus wäßrigen Lösungen, insbesondere Industrieabwässern, durch Reduktion und Filtration, dadurch gekennzeichnet, daß diese nach einem Reduktionsschritt in einem Absitzbecken von Quecksilberteilchen und Schmutzteilchen geklärt werden und anschließend die überstehende wäßrige Lösung aus dem Absitzbecken durch eine Tiefenfiltration mit einem Filtermedium der Korngröße 0,02 bis 2 mm, vorzugsweise 0,04 bis 0,6 mm, Teilschendurchmesser abgezogen, danach das Quecksilber aus dem Tiefenfilter durch Rückspülung in das Absitzbecken entfernt und im Absitzbecken zur Abscheidung gebracht wird.

2. Verfahren nach Anspruch 1, dadurch gekennzeichnet, daß das Filtermedium aus Quarzsand besteht.

**Revendications**

1. Procédé pour séparer du mercure et des composés du mercure de solutions aqueuses, plus particulièrement d'eaux usées industrielles, par réduction et filtration, procédé caractérisé en ce qu'on clarifie ces solutions aqueuses, après une étape de réduction, dans un bassin de décantation pour séparer les particules mercurielles et les particules de salissure, puis on retire la solution aqueuse surnageante du bassin de décantation par une filtration interne avec un milieu filtrant d'une granularité (diamètre des particules) comprise entre 0,02 et 2 mm, de préférence entre 0,04 et 0,6 mm, après quoi on extrait le mercure du filtre interne par rinçage en retour et on le renvoie au bassin de décantation où on le fait se déposer.

2. Procédé selon la revendication 1, caractérisé en ce que le milieu filtrant est constitué de sable quartzeux.

**Claims**

1. Process for the separation of mercury and mercury compounds from aqueous solutions, especially industrial effluent, by reduction and filtration, *characterised in that* after a reduction step in a settling tank, the solutions are cleansed of mercury particles and dirt particles, and subsequently the supernatant aqueous solution is removed from the settling tank by deep-bed filtration with a filtering medium having a particle size of from 0.02 to 2 mm, preferably from 0.04 and 0.6 mm, particle diameter, and the mercury is then removed from the deep-bed filter by backwashing into the settling tank and is deposited in the settling tank.

2. Process according to claim 1, *characterised in that* the filtering medium consists of quartz sand.